# EUROPEAN PATENT SPECIFICATION

(11) **EP 2 901 535 B1**
(45) Date of publication and mention of the grant of the patent: **26.01.2022**
(21) Application number: 12795725.6
(22) Date of filing: 17.10.2012
(51) Int. Cl.: H02H 9/06, H02H 9/04, H02H 9/00, H02H 1/04

(54) **OVERVOLTAGE PROTECTION WITH SPARK GAP AND TRIGGERING CIRCUIT**
ÜBERSPANNUNGSSCHUTZ MIT FUNKENSTRECKE UND ZÜNDSCHALTUNG
CONCEPTION DU CIRCUIT DE DÉCLENCHEMENT DE LA PROTECTION CONTRE LES SURTENSIONS

(30) Priority: 28.08.2012 CZ 20120580
(43) Date of publication of application: 05.08.2015
(73) Proprietor: SALTEK s.r.o., 40007 Usti nad Labem (CZ)
(72) Inventor: SUCHY, Jaromír, 40340 Ústí nad Labem (CZ)
(74) Representative: Kratochvil, Vaclav
(86) International application number: PCT/CZ2012/000104
(87) International publication number: WO 2014/032631

(56) References cited:
- EP-A2- 1 077 519
- DE-A1- 3 834 514
- US-A- 5 388 021
- US-A1- 2009 021 881

## Description

### Technical field

This invention relates to the design of the triggering circuit of the overvoltage protection, representing electrical protection circuits designed to reduce overvoltage in a protected distribution system. The overvoltage protection comprises the spark gap of the overvoltage protection provided with the first input terminal, the second input terminal interconnected in three poles with the triggering circuit of the overvoltage protection.

### Background art

The known technical solutions of triggering circuit designs of overvoltage protection devices deal with the excitation of the transformer primary winding directly by activating a gas discharge tube with an overvoltage impulse. This design is simple, however, its correct functioning depends on the steepness of the overvoltage pulse rise and so, in unfavourable circumstances, that is, if the rise of the pulse is low, i.e. the ratio of the voltage derivation to the time is low, the auxiliary electrode of the spark gap will not activate and, the discharge between the first main electrode and the second main electrode of the spark gap will not spark, which is the reason why such a concept of overvoltage protection is not functional.

This shortcoming is partially resolved by other used designs of the triggering circuit of overvoltage protection comprising a capacitive divider and a gas discharge tube. An example of a more complicated design with a capacitive divider is document GB 1076679 "Improvements in Triggered Spark Gap Type Surge Arrestors for D.C. Circuits", a more simplified design is shown in document US6111740 "Overvoltage protection system and overvoltage protection element for an overvoltage protection system". The disadvantage of these designs is the oscillation character of the current flowing in the triggering circuit of the overvoltage protection. With the oscillation current flowing through the secondary winding of the transformer going through zero, the discharge can extinguish between the first main electrode or the second main electrode and the auxiliary electrode of the spark gap; whereas in such case the discharge between the first main electrode and the second main electrode of the spark gap will not be activated, which results in the absence of the protection function of the overvoltage protection. Instead of the capacitive divider, a divider with semi-conductor voltage limiting elements is also used, e.g. in document US4683514 "Surge voltage protective circuit arrangements".

A modified design comprising a capacitive-varistor divider without a gas discharge tube is shown in document US5136455 "Electromagnetic interference suppression device".

Another known design of the triggering circuit of overvoltage protection, shown in document FR2902579 "Electrical installation protection device i.e. surge suppressor, has triggering unit passing spark gaps from the blocking state, in which gaps oppose the current circulation, to the passing state, in which gaps permit fault current to flow in branches", or the one shown in document US2003/0007303 "Pressure-resistant encapsulated air-gap arrangement for the draining off of damaging perturbances due to overvoltages", deal with the above-mentioned drawbacks by using combined divider with a varistor and capacitor. This design of the triggering circuit of overvoltage protection eliminates in some respect the disadvantages of the previous designs, however, the oscillation character of the current flowing through the triggering circuit of the overvoltage protection still remains, and consequently the problem with possible discharge extinguishing between the first main electrode and the second main electrode of the spark gap, which results in the absence of the protective function of the overvoltage protection.

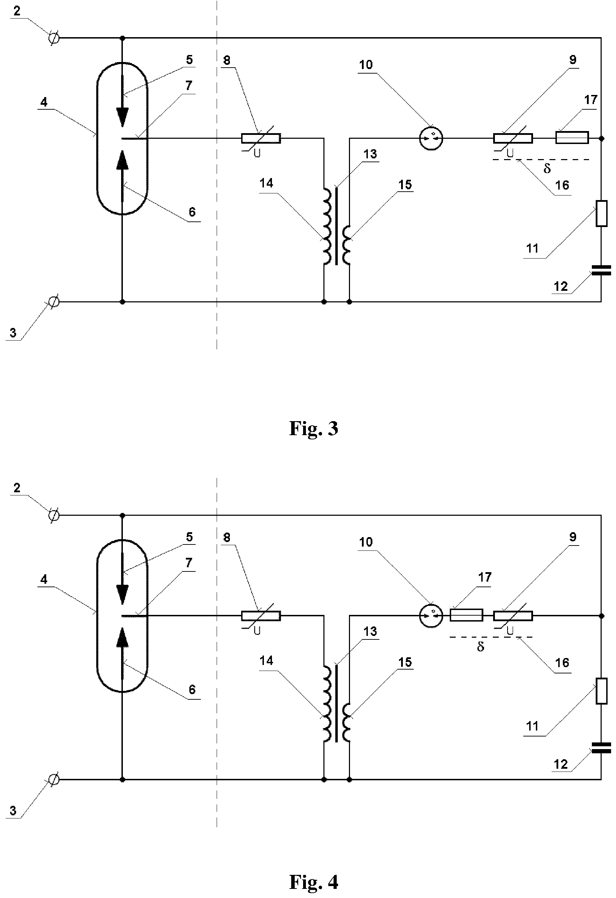

The solution shown in document EP1077519A "Method of operating an overvoltage protection device and overvoltage protection device with at least one coarse and one fine protection element" can be considered the closest to the current state of technology, specifically the design subject to Fig. 3 below, comprising identical elements in one of the options: the first input terminal, the second input terminal, the spark gap, the first main electrode, the second main electrode, the auxiliary electrode, the first varistor, the second varistor, the transformer, the secondary winding, the primary winding. This solution, similarly as the one shown in document EP1077519A, meets the basic function of the overvoltage protection, however, it features the same problem, i.e. inability to ignite the main spark gap if the current impulses show a low rise, because the integration element - capacitor - is missing.

US2009/021881 discloses an overvoltage protection having a spark gap, a transformer and a varistor and a thermo-sensitive disconnector in series with a gas discharge tube to feed the transformer. The varistor working together with the thermo-sensitive disconnector to disconnect current through the varistor in case it overheats. The transformer directly feeds the auxiliary electrode of the spark gap.

### Summary of invention

The aforesaid disadvantages are eliminated by a triggering circuit as set out in claim 1.

The overvoltage protection comprises a spark gap equipped with the first main electrode, the second main electrode and one auxiliary electrode in order to make the breakdown between the first main electrode and the second main electrode easier, for which the design of the triggering circuit of the overvoltage protection is specified.

The advantages of such a design of the triggering circuit of overvoltage protection offer better triggering ability due to the functioning part of the design of the triggering circuit of the overvoltage protection, located on the primary side of the of the transformer.

To ensure the design of the triggering circuit of the overvoltage protection works safely, it is advantageous that the thermo-sensitive disconnector coupled with the thermal coupling to the second varistor, is either connected in series to the second varistor, or connected to the link of the junction connecting the second varistor to the resistor and the junction connecting the first input terminal to the first main electrode of the spark gap, or that the thermo-sensitive disconnector is connected between the primary winding of the transformer and the gas discharge tube.

The mentioned advantageous design of the design of the triggering circuit of the overvoltage protection, complemented with a thermo-sensitive disconnector, enables disconnection of the triggering circuit of the overvoltage protection from the protected distribution system in the event of thermal overloading and impermissible heating or overheating of the second varistor, and it prevents it being damaged or subsequent damage that could arise as a result of damage to the whole overvoltage protection.

### Brief description of drawings

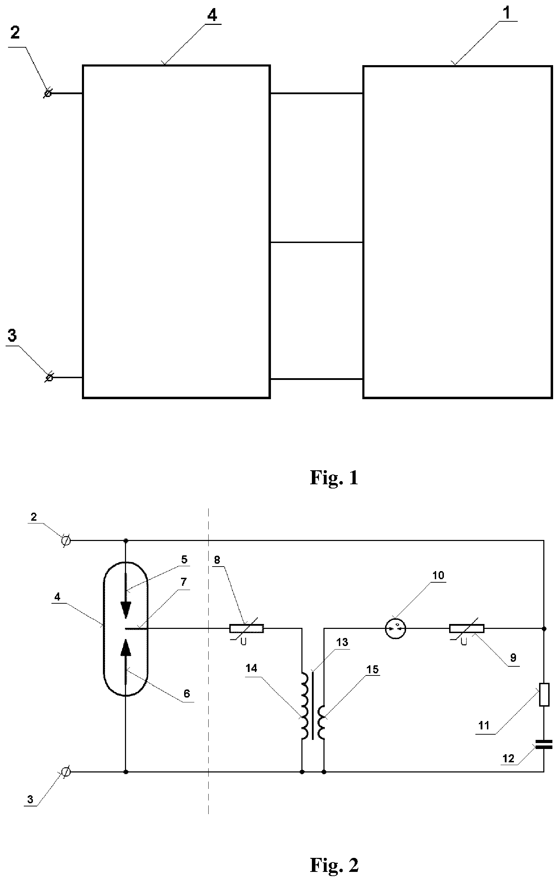

The invention will be more closely explained using drawings, in which Fig. 1 shows the block diagram of the spark gap of the overvoltage protection, provided with the first input terminal, the second input terminal interconnected in three poles to the triggering circuit.

Fig. 2 shows the principal diagram of the spark gap of the overvoltage protection and triggering circuit.

Fig. 3 shows the principal diagram of the spark gap of the overvoltage protection and triggering circuit, equipped with a thermo-sensitive disconnector which is coupled with the thermal coupling to the second varistor, and, at the same time, connected between the second varistor and the junction connecting the first input terminal to the resistor.

Fig. 4 shows the principal diagram of the spark gap of the overvoltage protection and triggering circuit, equipped with a thermo-sensitive disconnector coupled with the thermal coupling to the second varistor, and, at the same time, connected between the gas discharge tube and the second varistor.

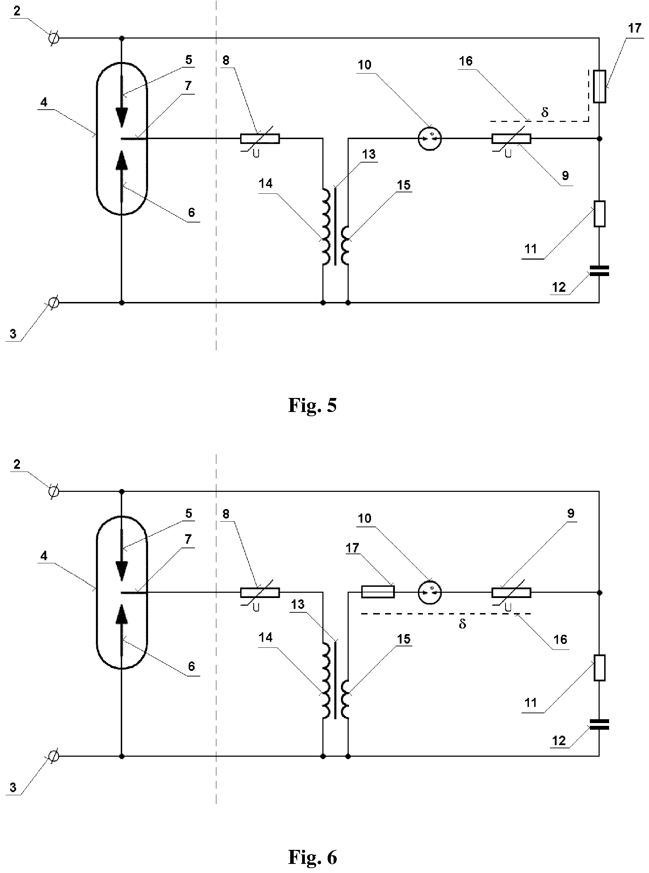

Fig. 5 shows the principal diagram of the spark gap of the overvoltage protection and triggering circuit, equipped with a thermo-sensitive disconnector coupled with thermal coupling to the second varistor and, at the same time, connected to the link between the junction connecting the second varistor to the resistor and the junction connecting the first input terminal to the first main electrode of the spark gap.

Fig. 6 shows the principal diagram of the spark gap of the overvoltage protection and triggering circuit, equipped with a thermo-sensitive disconnector coupled with thermal coupling to the second varistor and, at the same time, connected between the primary winding of the transformer and the gas discharge tube.

### Description of embodiments - examples

The overvoltage protection subject to Fig. 1 comprises a spark gap 4 of the overvoltage protection provided with the first input terminal 2 and the second input terminal 3, interconnected in three poles to a the triggering circuit 1 of the overvoltage protection.

The basic design of the triggering circuit 1 of the overvoltage protection according to Fig. 2 comprises an auxiliary electrode 7 of the spark gap 4 which is connected in series to the first varistor 8 and one end of the secondary winding 14 of the transformer 13, the other end of which is connected to the second main electrode 6 of the spark gap 4 and to the second input terminal 3, whereas one end of the primary winding 15 of the transformer 13 is connected in series to a gas discharge tube 10, the second varistor 9, resistor 11 and capacitor 12, connected to the other end of the primary winding 15 of the transformer 13, connected to the second input terminal 3, whereas the junction connecting the second varistor 9 to the resistor 11 is interconnected with the junction connecting the first input terminal 2 to the first main electrode 5 of the spark gap 4.

The resistance of the resistor 11 is at least double that of the second root of the ratio of inductance of the primary winding 15 of the transformer 13 and capacitor 12 capacity.

The advantageous designs of the triggering circuit 1 of the overvoltage protection are equipped with a thermo-sensitive disconnector 17 coupled with the thermal coupling 16 to the second varistor 9. In its simplest embodiment, the thermo-sensitive disconnector 17 can be executed using a thermal fuse.

The advantageous design of the triggering circuit 1 of the overvoltage protection according to Fig. 3 is equipped with a thermo-sensitive disconnector 17 coupled with the thermal coupling 16 to the second varistor 9 and, at the same time, connected between the second varistor 9 and the junction connecting the first input terminal 2 to the resistor 11.

The advantageous design of the triggering circuit 1 of the overvoltage protection according to Fig. 4 is equipped with a thermo-sensitive disconnector 17 coupled with the thermal coupling 16 to the second varistor 9 and, at the same time, connected between the gas discharge tube 10 and the second varistor 9.

The advantageous design of the triggering circuit 1 of the overvoltage protection according to Fig. 5 is equipped with a thermo-sensitive disconnector 17 coupled with the thermal coupling 16 to the second varistor 9 and, at the same time, connected to the link between the junction connecting the second varistor 9 to the resistor 11 and the junction connecting the first input terminal 2 to the first main electrode 5 of the spark gap 4.

The advantageous design of the triggering circuit 1 of the overvoltage protection according to Fig. 6 is equipped with a thermo-sensitive disconnector 17 coupled with the thermal coupling 16 to the second varistor 9 and, at the same time, connected between the primary winding 15 of the transformer 13 and the gas discharge tube 10.

An equivalent function of the design of the triggering circuit 1 of the overvoltage protection occurs in serial layout of the circuit elements of the second varistor 9 and the gas discharge tube 10, and/or the resistor 11 and capacitor 12, in reverse order, than it is shown in Figs. 2 to 6.

### Industrial applicability

The design of the triggering circuit of the overvoltage protection subject to this invention can be used in all applications where distribution systems are at risk of overvoltage. Unlike the known designs, this invention shows better triggering ability and thanks to the thermo-sensitive disconnector, further failures resulting from damage to the whole overvoltage protection can be prevented.

### Reference signs list

- 1: triggering circuit
- 2: first input terminal
- 3: second input terminal
- 4: spark gap
- 5: first main electrode
- 6: second main electrode
- 7: auxiliary electrode
- 8: first varistor
- 9: second varistor
- 10: gas discharge tube
- 11: resistor
- 12: capacitor
- 13: transformer
- 14: secondary winding
- 15: primary winding
- 16: thermal coupling
- 17: thermo-sensitive disconnector

## Claims

1. A triggering circuit (1) for an overvoltage protection is connected via three poles to a spark gap (4) of the overvoltage protection, the spark gap (4) is equipped with a first input terminal (2) and a second input terminal (3), wherein an auxiliary electrode (7) of the spark gap (4) is connected in series to a first varistor (8) and one end of a secondary winding (14) of a transformer (13), other end of the transformer (13) is connected to a second main electrode (6) of the spark gap (4) and to the second input terminal (3), at the same time one end of a primary winding (15) of the transformer (13) being connected in series with a gas discharge tube (10), a second varistor (9), a resistor (11) and a capacitor (12) connected to the other end of the primary winding (15) of the transformer (13) connected to the second input terminal (3), a junction connecting the second varistor (9) to resistor (11) being connected with the junction connecting the first input terminal (2) to the first main electrode (5) of the spark gap (4), a thermo-sensitive disconnector (17) coupled (16) by the thermal coupling to the second varistor (9) that is either connected in series to the second varistor (9), or is connected to the link between the junction connecting the second varistor (9) to the resistor (11) and the junction connecting the first input terminal (2) to the first main electrode (5) of the spark gap (4), or the thermo-sensitive disconnector (17) being connected between the primary winding (15) of the transformer (13) and the gas discharge tube (10).

## Patentansprüche

1. Anschluss eines Zündkreises (1) des Überspannungsschutzes, dreipolig angeschlossen an die Funkstrecke (4) des Überspannungsschutzes, die Funkstrecke (4) ist mit einer ersten Eingangsklemme (2) und mit einer zweiten Eingangsklemme (3) versehen, wobei die Hilfselektrode (7) der Funkstrecke (4) in Reihe mit dem ersten Varistor (8) und einem Ende der Sekundärwicklung (14) des Transformators (13) geschaltet ist, das zweite Ende des Transformators (13) ist mit der zweiten Hauptelektrode (6) der Funkstrecke (4) und der zweiten Eingangsklemme (3) verbunden, wobei die Primärwicklung (15) des Transformators (13) mit einem Ende in Reihe mit einem Gasableiter (10) verbunden ist, mit einem zweiten Varistor (9), einem Widerstand (11), einem Kondensator (12) mit dem zweiten Ende der Primärwicklung (15) des Transformators (13) verbunden ist, der an der zweiten Eingangsklemme (3) angeschlossen ist, der Knoten, der den zweiten Varistor (9) mit dem Widerstand (11) verbindet, ist mit dem Knoten verbunden, der die erste Eingangsklemme (2) mit der ersten Hauptelektrode (5) der Funkstrecke (4) verbindet, der temperaturempfindliche Trennschalter (17) ist durch eine thermische Bindung (16) mit dem zweiten Varistor (9) verbunden, er ist entweder mit dem zweiten Varistor (9) in Reihe geschaltet, oder in die Verbindung zwischen dem den zweiten Varistor (9) mit dem Widerstand (11) verbindenden Knoten und dem die erste Eingangsklemme (2) mit der ersten Hauptelektrode (5) der Funkstrecke (4) verbindenden Knoten eingeordnet, oder der temperaturempfindliche Trennschalter (17) ist zwischen der Primärwicklung (15) des Transformators (13) und dem Gasableiter (10) eingeordnet.

## Revendications

1. Le branchement de circuit (1) d'allumage d'une protection contre les surtensions, raccordé de façon tripolaire à un éclateur (4) à étincelles de la protection contre les surtensions, l'éclateur (4) à étincelles étant pourvu d'une première borne (2) d'entrée et d'une deuxième borne (3) d'entrée, une électrode (7) auxiliaire de l'éclateur (4) à étincelles étant connectée en série avec une première varistance (8) et une extrémité d'un enroulement (14) secondaire du transformateur (13), la seconde extrémité du transformateur (13) est connectée à la deuxième électrode (6) principale de l'éclateur (4) à étincelles et à la deuxième borne (3) d'entrée, un enroulement (15) primaire du transformateur (13) étant connecté en série, par l'une de ses extrémités, à un parafoudre (10) à gaz, à une deuxième varistance (9), à une résistance (11), à un condensateur (12), raccordé à la deuxième extrémité de l'enroulement (15) primaire du transformateur (13) connecté à la deuxième borne (3) d'entrée, le nœud reliant la deuxième varistance (9) à la résistance (11) est connecté au nœud reliant la première borne (2) d'entrée et la première électrode (5) principale de l'éclateur (4) à étincelles, un sectionneur (17) sensible à la température lié par une liaison thermique (16) à la deuxième varistance (9) est soit raccordé en série avec la deuxième varistance (9), soit inséré dans la connexion entre le nœud reliant la deuxième varistance (9) à la résistance (11) et le nœud reliant la première borne (2) d'entrée à la première électrode (5) principale de l'éclateur (4) à étincelles, ou le sectionneur (17) sensible à la température est inséré entre l'enroulement (15) primaire du transformateur (13) et le parafoudre (10) à gaz.
